# EUROPÄISCHE PATENTSCHRIFT

(11) **EP 3 048 119 B1**
(45) Veröffentlichungstag und Bekanntmachung des Hinweises auf die Patenterteilung: **01.11.2017**
(21) Anmeldenummer: 16152305.5
(22) Anmeldetag: 21.01.2016
(51) Int. Cl.: C08B 11/193

(54) **REVERSIBEL VERNETZTE CELLULOSEETHER UND VERFAHREN ZU DEREN HERSTELLUNG DURCH SELEKTIVE OXIDATION VON VICINALEN OH-GRUPPEN**
REVERSIBLY CROSS-LINKED CELLULOSE ETHERS AND PROCESS FOR THEIR PRODUCTION BY SELECTIVE OXIDATION OF VICINAL OH-GROUPS
ÉTHER DE CELLULOSE RETICULE REVERSIBLE ET SON PROCEDE DE PRODUCTION PAR OXYDATION SELECTIVE DES GROUPES OH VICINAUX

(30) Priorität: 23.01.2015 DE 102015000795
(43) Veröffentlichungstag der Anmeldung: 27.07.2016
(73) Patentinhaber: SE Tylose GmbH & Co.KG, 65203 Wiesbaden (DE)
(72) Erfinder: Stern, Roland, 65203 Wiesbaden (DE); Kleinert, Mike, 65203 Wiesbaden (DE); Ehrler, Rudolf, 65203 Wiesbaden (DE)
(74) Vertreter: Plate, Jürgen

(56) Entgegenhaltungen:
- EP-A2- 0 232 851
- WO-A1-2004/024775
- US-A- 4 675 394
- US-B2- 8 580 951

## Beschreibung

Die vorliegende Erfindung betrifft reversibel vernetzte, löseverzögerte Celluloseether sowie ein Verfahren zu dessen Herstellung ohne die Verwendung niedermolekularer, bi- oder mehrfunktioneller Vernetzer, die während des Löseprozesses freiwerden können.

Celluloseether werden bei einer Vielzahl von Anwendungen als Hilfsmittel zum Verdicken, Dispergieren und Stabilisieren von vorzugsweise wässrigen Lösungen und Dispersionen eingesetzt.

Die Herstellung von Celluloseethern mit einheitlichen oder unterschiedlichen Substituenten ist bekannt, siehe z. B. "Cellulose Ethers", Ullmann's Encyclopedia of Industrial Chemistry, Wiley-VCH Verlag GmbH, Weinheim, Germany.

Zur Herstellung dieser Celluloseether, wie z. B. Methylcellulose, Ethylcellulose, Carboxymethylcellulose, Hydroxyethylcellulose, Hydroxypropylcellulose, Methylhydroxyethylcellulose, Methylhydroxypropylcellulose, Ethylhydroxyethylcellulose, Carboxymethylhydroxyethylcellulose und Carboxymethylhydroxypropylcellulose, wird das Ausgangsmaterial, die Cellulose, üblicherweise zur Vergrößerung ihrer Oberfläche gemahlen, wobei die Teilchengröße in der Regel kleiner als 2,5 mm, häufig sogar kleiner als 1,0 mm sein sollte. Das resultierende, voluminöse Cellulosepulver wird in einem geeigneten Suspensionsmittel, in dem auch der resultierende Celluloseether unlöslich ist, suspendiert, je nach Ethertyp werden hierzu z. B. Wasser, Wasser-Alkohol-Gemische oder auch organische Lösungsmittel eingesetzt, und durch Zugabe von Base, wie z. B. NaOH, KOH, LiOH und/oder NH₄OH, in fester oder flüssiger Form in "Alkalicellulose" überführt. Es schließt sich, mit oder ohne Isolierung der Alkalicellulose, eine ein- oder mehrstufige, kontinuierliche oder diskontinuierliche Veretherung mit den entsprechenden Reagenzien, wie z. B. Methylchlorid, Ethylchlorid, 2-Chloressigsäure, Ethylenoxid oder Propylenoxid an. Während der Alkalisierung und Veretherung quillt die Cellulose bzw. der Celluloseether an, wodurch die Zugänglichkeit für das Veretherungsreagenz erhöht wird, geht jedoch zu keiner Zeit in Lösung. Diese heterogene Reaktion wird üblicherweise als Slurry-Verfahren bezeichnet. Die resultierenden Celluloseether werden je nach Ethertyp mit heißem Wasser oder geeigneten Lösungsmittelgemischen auf bekannte Weise von Reaktionsnebenprodukten gereinigt, getrocknet, gemahlen und gegebenenfalls mit anderen Komponenten abgemischt.

Trotz prinzipiell guter Löslichkeit dieser Celluloseether in kaltem Wasser, stellt die Herstellung wässriger Lösungen derselben häufig ein Problem dar. Dies gilt insbesondere dann, wenn der Celluloseether als feines Pulver vorliegt. Nicht behandelte, d. h. unvernetzte Celluloseether, neigen insbesondere beim Einbringen in kaltes Wasser oder wasserhaltige Lösungen zur Klumpenbildung, was den Löseprozess dieser prinzipiell gut wasserlöslichen Polymere stark erschwert oder teilweise nahezu unmöglich macht. Dies ist auf die hohe Affinität der Celluloseether oder vergleichbar hydrophiler Cellulosederivate gegenüber Wasser zurückzuführen. Beim Einrühren in Wasser bildet sich auf der Oberfläche der pulver- oder granulatförmigen Polymerteilchen eine klebrige Gelschicht, die eine Diffusionsbarriere darstellt. Weiteres Wasser kann diese wässrige Gelschicht nur sehr schwer durchdringen und somit nur sehr langsam ins Innere der Polymerteilchen vordringen. Sobald sich beim Einbringen von Celluloseether in Wasser gelartige Klumpen oder Agglomerate gebildet haben, ist ein vollständiges Auflösen der Celluloseether zu einer homogenen Lösung nur noch durch zeit- und energieintensive Mischvorgänge möglich.

Die Aufgabe, die klumpenfreie Löslichkeit von Celluloseethern sicherzustellen, wird großtechnisch durch die reversible Vernetzung der Celluloseetherketten mit kurzkettigen Dialdehyden, wie z. B. Glyoxal, gelöst (Stand der Technik). Beispiele für Verfahren, die eine verbesserte Löslichkeit durch die Verwendung von Dialdehyden erreichen, sind USA2 879 268, USA3 297 583, DEAS1 719 445 bzw. DEOS1 518 213 zu entnehmen.

Bei der Behandlung mit Dialdehyden wird der Celluloseether reversibel vernetzt. Hierzu werden freie Hydroxygruppen des Celluloseethers mit den Aldehydgruppen des Dialdehyds unter Bildung von Halbacetalbindungen zur Reaktion gebracht.

Dadurch werden benachbarte Polymerketten intra- und/oder intermolekular über kovalente Bindungen miteinander verbunden bzw. vernetzt. Ab einer hinreichend hohen Vernetzungsdichte erhält man einen modifizierten Celluloseether, der beim Einbringen in Wasser zunächst unlöslich und somit homogen dispergierbar ist. Die beschriebenen Halbacetalbindungen werden in Wasser oder wässrigen Lösungen unter Freisetzung des eingesetzten Dialdehyds hydrolysiert, so dass der Celluloseether insgesamt zeitlich verzögert, jedoch aufgrund der gut verteilten Celluloseetherpartikel im wässrigen Medium klumpenfrei in Lösung geht. Die Zeitdauer dieser Löseverzögerung kann über die Höhe der Vernetzung eingestellt werden. Nach dem Dispergieren des löseverzögerten Celluloseethers können weitere Komponenten zur Lösung hinzugegeben werden, so dass nach der vollständigen Lösung des Celluloseethers eine homogene Lösung, Suspension oder Emulsion vorliegt. Der Lösungsvorgang des vernetzten Celluloseethers kann durch eine Erhöhung des pH-Werts beschleunigt werden ("Cellulose Ethers", Kapitel 2.1., Ullmann's Encyclopedia of Industrial Chemistry, 2006, Wiley-VCH Verlag GmbH, Weinheim, Germany).

Bei den zur reversiblen Vernetzung eingesetzten und beim Auflösen wieder freigesetzten Dialdehyden handelt es sich um reaktive niedermolekulare Verbindungen, die toxikologisch nicht unbedenklich sind. So ist z. B. das zur Herstellung von löseverzögerten Celluloseethern industriell üblicherweise eingesetzte Glyoxal gemäß Verordnung (EG) Nr. 1272/2008 [CLP] als hautsensibilisierend (Kategorie 1) und mutagen (Kategorie 2) eingestuft. Gemäß dieser Verordnung müssen z. B. Zubereitungen mit mehr als 0,1 % Glyoxal bereits mit dem Hinweis EUH208 "Enthält Glyoxal. Kann allergische Reaktion hervorrufen" etikettiert werden.

Mit Glyoxal oder analogen Dialdehyden löseverzögert eingestellte Celluloseether sind daher nicht für den Einsatz in Arzneimitteln, Lebensmitteln oder Kosmetika zugelassen bzw. empfehlenswert. Auch bei technischen Anwendungsgebieten der Celluloseether, wie Baustoffen, Farben, Keramik u. a. gewinnt die toxikologische Unbedenklichkeit der eingesetzten Hilfsstoffe zunehmend an Bedeutung.

In EP 1 452 544 wird ein Verfahren zur Herstellung von wasserdispergierbaren Celluloseethern mit vermindertem Glyoxalgehalt beschrieben. Hiernach soll sich die zur Einstellung einer angestrebten Löseverzögerung benötigte Glyoxalmenge durch einen Zusatz von wasserlöslichen Aluminiumsalzen und/oder wasserlöslichen Boraten reduzieren lassen. Der Effekt der Glyoxalreduzierung ist jedoch nur gering und die zusätzlich eingesetzten Aluminium- und Borverbindungen sind toxikologisch ebenfalls nicht unbedenklich.

Um die bei der Herstellung von Celluloseethern auftretende Verklumpung zu vermindern, können Celluloseether auch mit Tensiden behandelt werden oder vor dem Einrühren in Wasser mit einem Nichtlösungsmittel angemaischt werden. Gegebenenfalls kann man vor dem Einrühren in Wasser den Celluloseether auch mit einem anderen Feststoff mischen, wodurch die Celluloseetherpartikel räumlich voneinander getrennt werden und somit weniger leicht zur Verklumpung neigen.

Bei in heißem Wasser unlöslichen Celluloseethern kann man den Celluloseether zunächst in heißem Wasser dispergieren und dann durch Abkühlen klumpenfrei in Lösung bringen. Auch durch Verwendung von leistungsstarken, schnell drehenden Rühraggregaten kann man der Klumpenbildung entgegenwirken.

Dem Fachmann ist jedoch bekannt, dass diese mechanischen und/oder physikalischen Problemlösungen häufig nicht anwendbar sind, z. B. aufgrund fehlender Ausrüstung oder einer fest vorgegebenen Formulierungsreihenfolge, beziehungsweise aufgrund des damit verbundenen zeitlichen, energetischen und/oder personellen und damit unwirtschaftlichen Mehraufwands vom Anwender oft nicht in Betracht gezogen werden können.

Es wäre daher wünschenswert, wenn man reversibel vernetzte, lösungssichere Celluloseether mit vertretbarem Aufwand herstellen könnte, die sich einerseits so verarbeiten lassen und ein identisches oder ähnliches Lösungsverhalten aufweisen wie die bekannten mit Glyoxal modifizierten Celluloseether, bei deren Herstellung andererseits jedoch weder Glyoxal noch andere niedermolekulare, bi- oder mehrfunktionelle Verbindungen, wie z. B. Malondialdehyd, Succinaldehyd oder Glutaraldehyd, eingesetzt bzw. bei der Hydrolyse der Vernetzung freigesetzt werden.

Es ist bekannt, dass sich Celluloseether mittels Oxidation von OH-Gruppen in aldehydgruppenhaltige Celluloseether überführen lassen. Die Aldehydgruppen der Celluloseetherketten können mit den OH-Gruppen benachbarter Celluloseetherketten Halbacetalbindungen eingehen (intermolekulare Vernetzung). Derartige Aldehydcelluloseether lassen sich somit prinzipiell analog wie die oben beschriebenen mit Glyoxal oder anderen Dialdehyden modifizierten Celluloseether in Wasser gut dispergieren, bevor sie mit einer gewissen Löseverzögerung klumpenfrei in Lösung gehen. Hierbei werden jedoch keine niedermolekuare Verbindungen zu- oder freigesetzt.

Die Herstellung von Aldehydcelluoseethern erweist sich jedoch als durchaus problematisch. Je nach Art des Oxidationsmittels und in Abhängigkeit der Reaktionsbedingungen, wie Menge des eingesetzten Oxidationsmittels, Reaktionstemperatur, Reaktionszeit und pH-Wert, kommt es hierbei üblicherweise zu unerwünschten Nebenreaktionen. Überoxidation zur Carboxylgruppe sowie Depolymerisations- und Kettenspaltungsreaktionen lassen sich nur schwer verhindern. Letztere führen zu einem in der Regel unerwünschten Molekulargewichtsabbau der polymer aufgebauten Celluloseether, so dass diese in Lösung eine deutlich verringerte Viskosität entwickeln. Mitunter treten auch irreversible Vernetzungsreaktionen auf, die die Lösegüte der Celluloseether inakzeptabel bis hin zur vollständigen Unlöslichkeit verringern.

Die Oxidation von Celluloseethern mit Perjodsäure oder Perjodat stellt eine vergleichsweise schonende Methode zur Darstellung von aldehydgruppenhaltigen Celluloseethern dar (siehe A. A. Sarymsakov et al., Uzbekskii Khimicheskii Zhurnal (1975), 19(5), 45-48). Hierbei werden in C2- und C3-Position der Anhydroglucoseeinheit befindliche vicinale OH-Gruppen unter Spaltung der C-C-Bindung zu Aldehydgruppen oxidiert. Dabei entstehen immer zwei Aldehydgruppen gleichzeitig. Die oxidierten Celluloseether werden als 2,3-Dialdehydcelluloseether (DACE) bezeichnet. Die maximale Anzahl der Aldehydgruppen wird bei den Celluloseethern durch die Veretherungshöhe und die Verteilung der Veretherung, d. h. durch die Anzahl der vicinalen OH-Gruppen der zugrunde gelegten Celluloseether begrenzt. Die Oxidation von vicinalen Diolen mittels Perjodsäure oder Perjodat ist in der Literatur unter dem Namen Glykolspaltung oder Malaprade-Reaktion bekannt. Die Oxidation von vicinalen OH-Gruppen zu Aldehydgruppen kann prinzipiell auch mittels Verwendung anderer, selektiv wirkender Oxidationsmittel, wie z. B. Bleitetraacetat (Criegee-Glykolspaltung), erfolgen.

In US 3 376 285 und WO 2003/097700 wird der Einsatz von Perjodsäure bzw. Perjodat zum Zwecke einer großtechnischen Herstellung von Celluloseethern mit verbesserter Dispergierbarkeit, verzögerter Lösezeit und klumpenfreier Einrührbarkeit in Wasser beschrieben bzw. erwähnt. In beiden Fällen werden jedoch direkt an den Anhydroglucoseeinheiten der Celluloseether befindliche OH-Gruppen zu Aldehydgruppen oxidiert.

In US 3 376 285 wird ein Gemisch aus Perjodsäure, Polypropylenglycol und Wasser auf einen kontinuierlich durchmischten Celluloseether aufgesprüht. Anschließend wird der oberflächenbehandelte Celluloseether 24 h bei 50 °C getrocknet. Das resultierende trockene Produkt lässt sich gut in Wasser dispergieren, ohne dass sich hierbei schwerlösbare Agglomerate bilden. Es werden keine Angaben zum Molekulargewicht bzw. zur Viskosität des Celluloseethers in wässriger Lösung gemacht. Eine 24-stündige Nachbehandlung mit Perjodsäure bei einer Temperatur von 50 °C führt jedoch zu einem erheblichen, unerwünschten Molekulargewichtsabbau. Es werden zudem keine Angaben zur Länge der erzielten Löseverzögerung gemacht (z. B. Anlösezeit). Es werden ferner keine Angaben zur Lösegüte, zur Lagerstabilität und zum pH-Wert gemacht. Darüberhinaus wird das Reaktionsprodukt nicht nochmal ausgewaschen, so dass Jodverbindungen im Produkt verbleiben. Zudem ist die Löseverzögerung ein kombinierter Effekt aus einer reversiblen Vernetzung über Halbacetalbindungen und einer Löseverzögerung aufgrund des Zusatzes von Polypropylenglycol (bessere Dispergierbarkeit durch Anmaischen mit einem mit Wasser mischbaren möglichst wenig flüchtigen Nichtlösemittel).

In WO 2003/097700 werden Celluloseether in den zwei angeführten Beispielen mittels einer Kombination aus N-Chlor-succinimid und 2,2,6,6-Tetramethyl-piperidin-1-oxyl (TEMPO) oxidiert und anschließend bei 105 °C getrocknet. Perjodsäure oder Perjodat wird lediglich als alternatives Oxidationsmittel erwähnt. Hierzu gibt es jedoch weder ein Beispiel noch Angaben zu Reaktionsbedingungen. Es werden keine Angaben zum Molekulargewicht bzw. zur Viskosität des Celluloseethers in wässriger Lösung gemacht. Es werden keine Angaben zur Lösegüte, zur Lagerstabilität und zum pH-Wert gemacht. Ferner wird das Reaktionsprodukt nicht nochmal ausgewaschen, so dass die aus den zugesetzten Oxidationsmitteln resultierenden Substanzen im Produkt verbleiben.

In US 4 675 394 werden Polysaccharide, darunter auch Cellulose, beschrieben, die Aldehydgruppen in einer seitenständigen Ethergruppe aufweisen. Die Aldehydgruppen werden hier nicht über eine Oxidation von OH-Gruppen, sondern mittels alkalischer Veretherung mit über Acetalgruppen geschützten bifunktionellen Aldehydverbindungen und anschließender säurekatalytischer Hydrolyse der Acetalschutzgruppen in die Polysaccharide eingeführt. Die Synthese ist aufgrund der zusätzlich erforderlichen Entfernung der Acetalgruppen vergleichsweise aufwendig. Hinzu kommt, dass auch bei mehrfach unter Variation der Reaktionsparameter durchgeführten Versuchen sich über den angeführten Syntheseweg keine aldehydgruppenhaltigen Celluoseether herstellen ließen. Zudem würden die zur Entfernung der Schutzgruppen erforderlichen sauren Bedingungen (pH 2,5 - 3,0) erwarten lassen, dass sich ein meist unerwünschter Molekulargewichtsabbau durch saure Etherspaltung der β-glycosidischen Bindung des Celluloseethers nicht vermeiden lässt. Bei den eingesetzten geschützten Aldehyden handelt es sich ferner um vergleichsweise teure Verbindungen, die nur in relativ kleinen Mengen über spezielle Auftragssynthesen kommerziell erhältlich sind. Der in US 4 675 394 beschriebene Weg ist somit zur Herstellung von aldehydgruppenhaltigen Celluloseethern, sofern sich diese überhaupt auf diese Weise darstellen lassen, großtechnisch ohne Bedeutung, da er einerseits viel zu teuer ist und andererseits für die Herstellung hochviskoser Celluloseether ungeeignet zu sein scheint.

In WO 2004/024775 werden temporär vernetzte Celluloseether beschrieben, die Aldehydgruppen in einer seitenständigen Estergruppe aufweisen. Die Aldehydgruppen werden hier nicht über eine Oxidation von OH-Gruppen, sondern mittels einer säurekatalytischen Veresterung von Celluloseethern mit niedermolekularen aliphatischen Vebindungen, die mindestens eine Säuregruppe und mindestens eine Aldehydgruppe aufweisen, in den Celluloseether eingeführt.

Bevorzugt handelt es sich hierbei um Glyoxylsäure. Bei den angeführten Beispielen wird nur eine vergleichsweise geringe Löseverzögerung (= Anquellverzögerung) erhalten. Eine vergleichbare Anquellverzögerung erhält man, wenn Celluloseether mit Wasser oder wässrigen organischen Lösungsmitteln etwas angefeuchtet, mit einer schwachen Säure, wie z. B. Zitronensäure oder Essigsäure, gemischt und anschließend bei erhöhter Temperatur getrocknet werden. Somit erscheint es fraglich, ob die in WO 2004/024775 beschriebene Anquellverzögerung überhaupt auf die Bildung eines Aldehydesters zurückzuführen ist. Aufgrund der sauren Reaktionsbedingungen ist damit zu rechnen, dass sich die Viskosität der Celluloseether deutlich verringert und die Lagerstabilität der sauren Produkte gering ist. Ferner ist damit zu rechnen, dass die Produkte nur im sauren pH-Bereich eine gewisse Anquellverzögerung aufweisen und diese bei Anhebung des pH-Wertes in den Neutralbereich nicht mehr vorhanden ist. Es werden keine Angaben zur Viskosität oder zur Lösegüte gemacht.

Aufgabe der vorliegenden Erfindung war es also, reversibel vernetzte, wasserlösliche Celluloseether bereitzustellen, die beim Lösen in Wasser keine gesundheitlich bedenklichen niedermolekularen Aldehyde oder Dialdehyde wie Glyoxal freisetzen. Eine weitere Aufgabe bestand darin ein Verfahren zu entwickeln, mit dem sich Celluloseether ohne Verwendung von niedermolekularen Dialdehyde, wie Glyoxal, reversibel vernetzen lassen. Die Celluloseether sollen dennoch ein Löseverhalten aufweisen, das dem Löseverhalten der mit Glyoxal vernetzten Celluloseether entspricht. Ferner soll die reversible Vernetzung bei Bedarf so durchführbar sein, dass die Celluloseether in wässriger Lösung eine vergleichbar hohe Viskosität entwickeln (Vermeidung von Polymerabbau) wie die zugrunde liegenden nicht modifizierten Celluloseether. Zudem sollen sich die Celluloseether kostengünstig und in großtechnischem Maßstab herstellen lassen.

Gelöst wird diese Aufgabe durch einen reversibel vernetzten, wasserlöslichen Celluloseether mit mindestens zwei unterschiedlichen Etherkomponenten, der dadurch gekennzeichnet ist, dass
a) mindestens eine der Etherkomponenten eine Alkyl-, Hydroxyalkyl- oder Carboxymethyl-Gruppe ist und
b) mindestens eine der Etherkomponenten eine Alkylgruppe mit einer AldehydFunktionalität ist, die mit freien Hydroxygruppen des Celluloseethers hydrolysierbare Halbacetale bilden kann.

Die Etherkomponente a) ist bevorzugt eine Methyl-, Ethyl-, Propyl-, Butyl-, sec-Butyl-, Isobutyl-, 2-Hydroxyethyl-, Hydroxypropyl- und/oder eine Carboxymethyl-Gruppe. Der Substitutionsgrad DS(Alkyl) liegt zweckmäßig im Bereich von 1,2 bis 2,2, bevorzugt im Bereich von 1,4 bis 2,0. Der Substitionsgrad MS(Hydroxyalkyl) liegt zweckmäßig im Bereich von 1,0 bis 4,0, bevorzugt im Bereich von 1,5 bis 3,5. Der Substitutionsgrad DS(Carboxymethyl) liegt zweckmäßig im Bereich von 0,2 bis 1,2, bevorzugt im Bereich von 0,4 bis 1,0. Bei mehreren Etherkomponenten können die zusätzlichen Komponenten auch einen deutlich geringeren Substitutionsgrad aufweisen. Entscheidend ist, dass die Gesamtveretherung hinreichend hoch ist, um eine gute Löslichkeit der Produkte in Wasser zu gewährleisten. Prinzipiell kommen bevorzugt alle gängigen Etherkombinationen und Substitutionsgrade von kommerziell verfügbaren wasserlöslichen Celluloseethern in Betracht. Die Etherkomponente b) ist bevorzugt eine 2-Oxo-ethyl-Gruppe (-CH₂-CH=O). Der Substitutionsgrad DS_{Aldehyd} (2-Oxo-ethyl) liegt zweckmäßig im Bereich von etwa 0,0001 bis 0,1, bevorzugt im Bereich von etwa 0,001 bis 0,05. Diese wird bevorzugt aus einer 2,3-Dihydroxypropylether-Gruppe mittels selektiver Oxidation durch Umsetzung mit bevorzugt Natriumperjodat gebildet. Hierbei sollte der MS_{HPO} vor der Oxidation zweckmäßigerweise etwas höher sein als der angestrebte DS_{Aldehyd}. Prinzipiell kann der MS_{HPO} auch höher, d. h. im Bereich des unter a) genannten Substitutionsgrads MS (Hydroxyalkyl) eingestellt werden, was jedoch aufgrund der deutlich höheren Rohstoffkosten für 2,3-Epoxypropanol (Glycidol) oder 3-Chlor-1,2-propandiol gegenüber z. B. Ethylenoxid oder Propylenoxid bei einer großtechnischen Herstellung der erfindungsgemäß beanspruchten reversibel vernetzten, wasserlöslichen Celluloseether von eher untergeordnetem Interesse ist.

Als Ausgangscellulose kommen alle zur Herstellung von Celluloseethern einsetzbaren Zellstoffe in Betracht. Bevorzugt einsetzbar sind Nadel- und Laubholzzellstoffe sowie Baumwolllinters. Die Grenzviskositätszahl der Zellstoffe liegt überlicherweise im Bereich von etwa 200 bis 2200 ml/g.

Die hiermit einstellbaren Viskositätsstufen der erfindungsgemäßen Celluloseether entsprechen denen, die dem Fachmann aus der Literatur von herkömmlichen Celluloseethern her bekannt beziehungsweise kommerziell erhältlich sind. Bei der Herstellung von niedrigviskosen Celluloseethern können die dem Fachmann bekannten Abbauverfahren, wie z. B. Molekulargewichtsabbau mittels Behandlung mit Wasserstoffperoxid, angewandt werden. Die Brookfield Viskosität einer 1,0 %igen wässrigen Lösung der Celluloseether kann somit in einem Bereich von 1 bis etwa 15.000 mPa·s, bevorzugt in einem Bereich von 100 bis 10.000 mPa·s liegen (nach hinreichend langer Lösezeit bzw. Aufhebung der Vernetzung mittels Zugabe von Alkali).

Der erfindungsgemäße Celluloseether ist wasserlöslich. Darunter soll verstanden werden, dass mindestens 10 g davon löslich sind in 1 Liter destilliertem Wasser mit einer Temperatur von 20 °C.

Herstellen lassen sich die erfindungsgemäßen Celluloseether nach einem Verfahren mit den Schritten
a) Behandeln von Cellulose oder Celluloseether mit wäßrigem Alkalihydroxid,
b) Umsetzen der alkalisierten Cellulose mit (i) Ethylenoxid, Propylenoxid und/oder einem Alkylhalogenid und/oder 2-Choressigsäure bzw. dem Natriumsalz der 2-Chloressigsäure und (ii) mit 2,3-Epoxypropanol (Glycidol) oder 3-Chlorpropan-1,2-diol, oder Umsetzen des alkalisierten Celluloseethers mit 2,3-Epoxypropanol oder 3-Chlorpropan-1,2-diol, wobei jeweils 2,3-Dihydroxypropylether-Gruppen entstehen,
c) gegebenenfalls Waschen des in Schritt b) erhaltenen Produkts,
d) Oxidative Spaltung der vicinalen Hydroxygruppen in den 2,3-Dihydroxypropylether-Gruppen, wobei 2-Oxo-ethylether-Gruppen entstehen,
e) Waschen des in Schritt d) erhaltenen Celluloseethers und
f) Trocknen des gewaschenen Cellulosethers.

Der in Schritt a) eingesetzte Celluloseether ist bevorzugt Methylcellulose, Methylcarboxymethylcellulose, Methylhydroxypropylcellulose, Hydroxyethylcellulose, Hydroxyethylcarboxymethylcellulose, Carboxymethylcellulose oder Hydroxypropylcellulose. Es können also sowohl ionische wie auch nicht-ionische Celluloseether eingesetzt werden.

Die Alkalisierung wie die Veretherung der Cellulose bzw. des Celluloseethers erfolgt vorzugsweise in einem Slurry-Verfahren. Die Umsetzung der alkalisierten Cellulose mit dem Ethylenoxid, Propylenoxid und/oder dem Alkylhalogenid in Schritt b) kann gleichzeitig mit der Umsetzung mit dem 2,3-Epoxypropanol oder dem 3-Chlorpropan-1,2-diol erfolgen. Alternativ kann die Umsetzung mit dem 2,3-Epoxypropanol oder dem 3-Chlorpropan-1,2-diol direkt nach der Umsetzung mit dem Ethylenoxid, Propylenoxid und/oder dem Alkylhalogenid erfolgen, vorzugsweise in demselben Reaktionsgefäß.

Die oxidative Spaltung in Schritt c) erfolgt vorzugsweise durch Behandeln mit Perjodat, Perjodsäure oder Bleitetraacetat. Als Oxidationsmittel kommen prinzipiell alle Reagenzien in Betracht, die vicinale Hydroxygruppen unter Spaltung der C-C-Bindung möglichst selektiv bis zur Aldehydstufe oxidieren. Die Spaltung wird vorzugsweise bei einer Temperatur von 10 bis 60 °C, insbesondere 30 bis 50 °C, über einen Zeitraum von 30 Minuten bis 10 Stunden, insbesondere von 3 bis 5 Stunden, durchgeführt. Der pH-Wert der Mischung bei der oxidativen Spaltung liegt zweckmäßig im Bereich von 4 bis 7, bevorzugt von 5 bis 6. Bei der oxidativen Spaltung entsteht Formaldehyd, der beim nachfolgenden Waschen des Celluloseethers entfernt wird. Gegebenenfalls wird die oxidative Spaltung so durchgeführt, dass nur ein Teil der 2,3-Dihydroxypropyl-Gruppen gespalten wird.

Das Waschen und Trocknen der Celluloseether erfolgt auf fachübliche Weise. Dabei reagieren die Carbaldehydgruppen mit Hydroxygruppen der Celluloseether unter Wasserabspaltung und Bildung von Halbacetalen. Erfolgt die Halbacetalbildung zwischen zwei benachbarten Celluloseetherketten, so erhält man zunächst verzweigte und bei hinreichend hoher Zahl von Halbacetalbrücken vollständig vernetzte Celluloseether. Die Vernetzung erfolgt somit über die gleiche chemische Reaktion wie bei der Vernetzung mit Glyoxal. Im Unterschied zur Vernetzung mit Glyoxal wird hier jedoch nur eine Halbacetalbindung pro Vernetzungspunkt gebildet, so dass bei der Hydrolyse der Halbacetalgruppen keine niedermolekulare Verbindung freigesetzt wird, d.h. die zur Vernetzung genutzte Aldehydgruppe ist monofunktional und mittels einer in Wasser oder wasserhaltigen Lösungsmitteln hydrolysebeständigen kovalenten Bindung fest mit jeweils einer der beteiligten Celluloseetherketten verbunden.

Der besondere Vorteil der vorliegenden Erfindung gegenüber der Vernetzung mit niedermolekularen bi- oder mehrfunktionellen Verbindungen liegt darin, dass beim Auflösen der vernetzten Celluloseether in Wasser von den erfindungsgemäß vernetzten Celluloseethern keine niedermolekulare Substanz mehr abgespalten wird und dass daher Probleme im Zusammenhang mit der toxikologischen Bedenklichkeit derAbspaltprodukte nicht mehr auftreten können.

### Analysenmethoden:

### Bestimmung der Grenzviskositätszahl (GVZ):

Die zur Charakterisierung der eingesetzten Zellstoffe angeführten Grenzviskositätszahlen wurden mit einem Viscomat II der Firma Lagge an Kupferethylendiamin-Lösung (Cuen-Lösung) bei 25,0 °C gemäß der dem Fachmann bekannten Methode ISO 5352:2010 ermittelt.

### Bestimmung des Trockengehalts (TG):

Die zur Charakterisierung der eingesetzten Zellstoffe angeführten Trockengehalte wurden mit einem Infrarot-Schnelltrockner Moisture Analyser MA 30 der Firma Sartorius bei einer Trocknungstemperatur von 105 °C bestimmt. Hierbei wurden ca. 3 g Zellstoff bis zur Gewichtskonstanz getrocknet.

### Bestimmung der Viskosität (Visk):

Die zur Charakterisierung der hergestellten Celluloseether angeführten Viskositätswerte wurden mit einem Rotationsviskosimeter der Firma Brookfield (Modell RVDV-III) an wässriger Lösung nach einer Lösezeit von 2 Tagen bei 20,0 °C unter Verwendung von entionisiertem Wasser und einer Rotationsgeschwindigkeit von 20 U/min ermittelt. Die Konzentration der Celluloseetherlösung von 1,0 bzw. 1, 9 Gew.-% bezieht sich auf den absolut trockenen Celluloseether (atro). Die Nummer der verwendeten Spindel ist dem Viskositätswert in Klammer nachgestellt.

Bestimmung der Veretherungshöhen bzw. der molaren Substitutionsgrade (MS_{EO} und MS_{HPO}):
Die zur Charakterisierung der hergestellten Celluloseether angeführten molaren Substitutionsgrade wurden mittels Zeisel-Aufschluss mit Jodwasserstoffsäure und GC-Analyse ermittelt. Hierzu wurde der Celluloseether in einem geschlossenen Gefäß in Gegenwart von Adipinsäure, Toluol (interner Standard) und Xylol (Lösemittel) mit Jodwasserstoffsäure bei ca. 143-150 °C zersetzt, wobei sich das durch Abspaltung der Ethergruppen gebildete Alkyljodid in der Xylol-Phase löst. Zur Gehaltsbestimmung wurde ein aliquoter Teil der Xylol-Phase in einen Gaschromatograhen (z. B. TraceGC ultra, Thermo Electron Corporation) injiziert. Auf der Trennsäule des Gaschromatographen (z. B. 30 m DB-624 x 0,53 mm i. D. x 3,0 µm Film oder vergleichbare Säule; Vorsäule z. B. 2,5 m deaktiviertes Kapillarrohr, 0,53 mm i. D.) wurden die Komponenten aufgetrennt. Die Peakflächen wurden über ein Labordatensystem ausgewertet. Die Gehaltsbestimmung erfolgte nach der Methode des internen Standards (ISTD), mittels Mehrpunktkalibrierung. Der MS_{EO} ist der aus der Veretherung mit Ethylenoxid resultierende molare Substitutionsgrad. Der MS_{HPO} ist der aus der Veretherung mit 2,3-Epoxypropanol (Glycidol bzw. Hydroxypropylenoxid) resultierende molare Substitutionsgrad. Hierbei wurde ein Blindwert von 0,005 (Beispiel 1-8 und Vergleichsbeispiel 1) bzw. 0,003 (Beispiel 9-14 und Vergleichsbeispiel 2) in Rechnung gestellt, d. h. von dem aus dem mittels GC ermittelten OC₃H₆-Gehalt berechneten MS_{HPO}-Wert subtrahiert. Zudem erfolgte die Bestimmung am Endprodukt und somit nach der Behandlung mit Perjodat. Unter der Annahme einer selektiven Spaltung der 2,3-Dihydroxypropylether-Gruppen und einer 100 prozentigen Umsetzung (kein Perjodat mehr nachweisbar) kann man hieraus den vor der Behandlung mit Perjodat vorliegenden MS_{HPO}-Wert berechnen, indem man die auf die Anhydroglucoseeinheit bezogene eingesetzte Perjodatmenge (mol Perjodat pro mol AHG) addiert.

Berechnung der mittels Glycolspaltung erzeugten Alkylgruppen mit einer AldehydFunktionalität (DS_{Aldehyd}):
Der DS_{Aldehyd} ist der aus der Umsetzung der 2,3-Dihydroxypropylether-Gruppen mit Perjodat resultierende durchschnittliche Substitutionsgrad an 2-Oxo-ethyl-Gruppen. Unter der Annahme einer selektiven Spaltung der 2,3-Dihydroxypropylether-Gruppen und einer 100 prozentigen Umsetzung (kein Perjodat mehr nachweisbar) ist der DS_{Aldehyd} identisch mit der auf die Anhydroglucoseeinheit bezogene eingesetzte Perjodatmenge (MV PJ; mol Perjodat pro mol AHG). Hierbei muss der vor der Behandlung mit Perjodat vorliegende MS_{HPO} hinreichend hoch sein. Dies gilt nur dann, wenn die DHPHEC vor der Behandlung mit Perjodat hinreichend ausgewaschen wurde, da ansonsten Ethylenglycol (Nebenprodukt der Veretherung mit Ethylenoxid) ebenfalls mit dem Perjodat reagiert. Ohne vorherige Auswaschung ist daher die zur Einstellung einer angestrebten Löseverzögerung erforderliche Menge an Perjodat größer als bei zuvor ausgewaschener DHPHEC.

### Bestimmung des pH-Werts (pH):

Die zur Charakterisierung der hergestellten Celluloseether angeführten pH-Werte wurden mittels eines pH-Meters mit pH-Einstabmesskette an 1,0 Gew.-%igen Lösungen (atro) in entionisiertem Wasser bei 25 °C bestimmt.

### Bestimmung des Zentrifugenrückstands (ZR):

Die zur Beurteilung der Lösegüte der hergestellten Celluloseether angeführten Zentrifugenrückstände wurden über eine gravimetrische Bestimmung der wasserunlöslichen Anteile ermittelt (bezogen auf die Trockensubstanz der Celluloseether). Dazu wurden die Celluloseether in entionisiertem Wasser gelöst und die in der Lösung befindlichen unlöslichen Schwebeteilchen in einer Zentrifuge abgeschleudert. Der Überstand wurde abgesaugt und die Anteile an löslichem Celluloseether im Niederschlag durch mehrere Wasch- und Zentrifugiergänge ausgewaschen. Der verbliebene unlösliche Rückstand wurde getrocknet und gewogen. Mit der Methode werden sowohl wasserunlösliche Fasern als auch Quellkörper erfasst.

### Bestimmung derAnlösezeit (AZ) und Endlösezeit (EZ):

Die zur Beurteilung der Löseverzögerung der hergestellten Celluloseether angeführten Anlösezeiten und Endlösezeiten wurden in Wasser durch eine kontinuierliche Viskositätsmessung und Registrierung über einen xt-Schreiber während des Lösevorgangs im Brabender-Viskograph bei 20,0 °C unter Verwendung von Leitungswasser, einer Celluloseethereinwaage von 1,5 Gew.-% und einer Rührgeschwindigkeit von 75 U/min ermittelt. Die Anquellzeit ist die Zeit in Minuten zwischen Zugabe des Produktes und Erreichen einer Viskosität von 100 Brabender-Einheiten (BE) = 65 mPa·s. Die Endlösezeit ist die Zeit in Minuten nach der keine Viskositätszunahme mehr erfolgt.

### Molverhältnisse (MV):

Die in den Tabellen angeführten Molverhältnisse beziehen sich stets auf die Molzahl der Anhydroglucoseeinheit (AHG) des eingesetzten Zellstoffs. MV EO = mol Ethylenoxid pro mol AHG; MV HPO = mol 2,3-Epoxypropanol (Glycidol bzw. Hydroxypropylenoxid) pro mol AHG; MV PJ = mol Natriummetaperjodat pro mol AHG.

Anhand der Beispiele wird aufgezeigt wie sich die erfindungsgemäßen löseverzögert modifizierten Celluloseether durch Co-veretherung von herkömmlichen Celluloseethern und -mischethern mit einer weiteren Etherkomponente, die eine oder ggf. auch mehrere vicinale Hydroxygruppen aufweist, und anschließender oxidativer Spaltung der die Hydroxygruppen tragenden C-C-Bindung ohne besonderen Aufwand herstellen lässt. Das Ausmaß der Löseverzögerung kann dabei in einfacher Weise über die Höhe der Co-veretherung und/oder den Grad der Oxidation gezielt eingestellt werden. Aufgrund der hohen Selektivität und den erforderlichen milden Reaktionsbedingungen bei der Oxidation, können dabei modifizierte Celluloseether mit gleichbleibend hoher Viskosität hergestellt werden. Es ist jedoch auch möglich, die Viskosität des modifizierten Celluloseethers durch die Oxidationsreaktion gezielt zu reduzieren. Die Co-veretherung des Celluloseethers kann hierbei nach den üblichen dem Fachmann bekannten Verfahren erfolgen. Insbesondere kann die Co-veretherung sowohl einstufig als auch zweistufig wie auch nachträglich durchgeführt werden. Ferner kann die Veretherung sowohl ohne als auch mit Teilneutralisation während der Veretherung durchgeführt werden, wobei letzteres üblicherweise bei der Herstellung von Celluloseethern mit erhöhter Biostabilität zur Anwendung kommt. Die Oxidation der vicinalen Hydroxygruppen der Etherkomponente kann vor, während oder nach der Auswaschung des Celluloseethers erfolgen. Die Beispiele beschreiben exemplarisch die Herstellung von löseverzögert modifizierter Hydroxyethylcellulose, die mittels Veretherung gemäß dem sogenannten Slurry-Verfahren unter Verwendung von *tert*.-Butanol bzw. Isopropanol als Suspensionsmittel durchgeführt wurden. Als Co-veretherungskomponente wurde stets 2,3-Epoxypropanol und als Oxidationsmittel Natriummetaperjodat verwendet.

Prozente sind in den nachfolgenden Beispielen Gewichtsprozente, soweit nicht anders angegeben oder aus dem Zusammenhang ersichtlich.

### Beispiel 1:

83,2 g (0,50 mol) gemahlener Zellstoff (TG = 97,4 %; GVZ = 1.350 ml/g) wurden mit 537,6 g 95 %igem *tert*.-Butanol und 73,0 g 100 %igem Isopropanol versetzt und in einem 2 I Druckreaktor unter Rühren suspendiert. Die Suspension wurde mittels mehrerer Vakuum/Stickstoff-Zyklen von Sauerstoff befreit (3 mal Vakuumziehen bis 0,1 bar mit dazwischen liegender Stickstoffbeaufschlagung bis 2,1 bar). Danach wurden 83,9 g 31,0 %ige Natronlauge (0,65 mol) über einen mitinertisierten Tropftrichter zudosiert, die Suspension wurde nochmals analog wie zuvor von Sauerstoff befreit und 20 min bei 25 °C gerührt. Nach Zugabe von 66,1 g (1,50 mol) Ethylenoxid über eine totraumfrei angeschlossene Druckgasflasche wurde die Suspension in 120 min auf 85 °C hochgeheizt und anschließend mit 60,9 g 59,0 %ige Salpetersäure (0,57 mol) über einen mitinertisierten Tropftrichter teilneutralisiert. Es wurden 18,5 g (0,25 mol) 2,3-Epoxypropanol zugegeben und 120 min bei 85 °C gerührt. Nach dem Abkühlen auf 30 °C wurde mit ca. 4,8 g (0,08 mol) Essigsäure neutralisiert und das Produkt mittels mehrmaligem Beaufschlagen mit 80 %igem Aceton salzfrei gewaschen. Der über eine Glasfritte abgesaugte feuchte Filterkuchen wurde wieder in den Reaktor überführt und in 1000 g 85 %igem Aceton suspendiert. Mittels Zugabe von Essigsäure wurde ein pH-Wert von 5,0 eingestellt. Anschließend wurde eine Lösung aus 0,86 g (0,004 mol) Natriummetaperjodat in 50 g Wasser zugegeben und 3 h bei 50 °C gerührt. Nach dem Abkühlen auf 30 °C wurde das Produkt mittels Beaufschlagen mit 80 %igem Aceton salzfrei gewaschen und mittels Beaufschlagen mit 100 %igem Aceton entwässert und über eine Glasfritte abgesaugt. Der Filterkuchen wurde zerkleinert, über Nacht bei 70 °C getrocknet, gegenüber Raumluft fechtekonditioniert, gemahlen und auf kleiner 1000 µm abgesiebt. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,18; MS_{HPO} = 0,347; Visk 1,0 % = 2.495 mPa·s (Sp. 3); Visk 1,9 % = 20.300 mPa·s (Sp. 6); pH 1,0 % = 5,6; ZR = 0,1 %; AZ = 27 min; EZ = 70 min.

### Vergleichsbeispiel 1:

83,2 g (0,50 mol) gemahlener Zellstoff (TG = 97,4 %; GVZ = 1.315 ml/g) wurden mit 537,6 g 95 %igem *tert*.-Butanol und 73,0 g 100 %igem Isopropanol versetzt und in einem 2 I Druckreaktor unter Rühren suspendiert. Die Suspension wurde mittels mehrerer Vakuum/Stickstoff-Zyklen von Sauerstoff befreit (3 mal Vakuumziehen bis 0,1 bar mit dazwischen liegender Stickstoffbeaufschlagung bis 2,1 bar). Danach wurden 83,9 g 31,0 %ige Natronlauge (0,65 mol) über einen mitinertisierten Tropftrichter zudosiert, die Suspension wurde nochmals analog wie zuvor von Sauerstoff befreit und 20 min bei 25 °C gerührt. Nach Zugabe von 66,1 g (1,50 mol) Ethylenoxid über eine totraumfrei angeschlossene Druckgasflasche wurde die Suspension in 120 min auf 85 °C hochgeheizt und anschließend mit 60,9 g 59,0 %ige Salpetersäure (0,57 mol) über einen mitinertisierten Tropftrichter teilneutralisiert. Es wurden 18,5 g (0,25 mol) 2,3-Epoxypropanol zugegeben und 120 min bei 85 °C gerührt. Nach dem Abkühlen auf 30 °C wurde mit ca. 4,8 g (0,08 mol) Essigsäure neutralisiert und das Produkt mittels mehrmaligem Beaufschlagen mit 80 %igem Aceton salzfrei gewaschen und mittels Beaufschlagen mit 100 %igem Aceton entwässert und über eine Glasfritte abgesaugt. Der Filterkuchen wurde zerkleinert, über Nacht bei 70 °C getrocknet, gegenüber Raumluft fechtekonditioniert, gemahlen und auf kleiner 1000 µm abgesiebt. Die erhaltene pulverförmige DHPHEC zeigte keine Löseverzögerung und klumpte beim Einrühren in Wasser, wobei die Lösung zwar sofort Viskosität entwickelte, jedoch die verklumpten Anteile erst nach Tagen vollständig in Lösung gingen. Es wurden die folgenden Produktkenndaten ermittelt: MS_{EO} = 2,22; MS_{HPO} = 0,368; Visk 1,0 % = 2.730 mPa·s (Sp. 4); Visk 1,9 % = 19.550 mPa·s (Sp. 6); pH 1,0 % = 6,8; ZR = 0,1 %; AZ und EZ nicht ermittelt, da nicht klumpenfrei einrührbar.

### Beispiel 2:

Die Versuchsdurchführung erfolgte analog wie in Beispiel 1 beschrieben, jedoch wurden anstelle von 0,86 g (0,004 mol) nur 0,43 g (0,002 mol) Natriummetaperjodat zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,19; MS_{HPO} = 0,380; Visk 1,0 % = 2.970 mPa·s (Sp. 4); Visk 1,9 % = 22.100 mPa·s (Sp. 6); pH 1,0 % = 5,9; ZR = 0,4 %; AZ = 13 min; EZ = 42 min.

### Beispiel 3:

Die Versuchsdurchführung erfolgte analog wie in Beispiel 1 beschrieben, jedoch wurden anstelle von 0,86 g (0,004 mol) nur 0,11 g (0,0005 mol) Natriummetaperjodat zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,23; MS_{HPO} = 0,378; Visk 1,0 % = 2.770 mPa·s (Sp. 4); Visk 1,9 % = 19.200 mPa·s (Sp. 6); pH 1,0 % = 5,8; ZR = 0,6 %; AZ = 7 min; EZ = 33 min.

### Beispiel 4:

Die Versuchsdurchführung erfolgte analog wie in Beispiel 2 beschrieben, jedoch wurden anstelle von 18,5 g (0,25 mol) nur 1,85 g (0,025 mol) 2,3-Epoxypropanol gelöst in 20 g 95 %igem *tert*.-Butanol zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,16; MS_{HPO} = 0,031; Visk 1,0 % = 1.875 mPa·s (Sp. 3); Visk 1,9 % = 16.060 mPa·s (Sp. 5); pH 1,0 % = 6,7; ZR = 0,7 %; AZ = 9 min; EZ = 29 min.

### Beispiel 5:

Die Versuchsdurchführung erfolgte analog wie in Beispiel 2 beschrieben, jedoch wurden anstelle von 18,5 g (0,25 mol) nur 0,37 g (0,005 mol) 2,3-Epoxypropanol gelöst in 20 g 95 %igem *tert*.-Butanol zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,27, MS_{HPO} = 0,004; Visk 1,0 % = 1.185 mPa·s (Sp. 3); Visk 1,9 % = 11.500 mPa·s (Sp. 5); pH 1,0 % = 6,5; ZR = 0,6 %; AZ = 8 min; EZ = 21 min.

### Beispiel 6:

Die Versuchsdurchführung erfolgte analog wie in Beispiel 4 beschrieben, jedoch wurden 79,3 g (1,80 mol) anstelle von 66,1 g (1,50 mol) Ethylenoxid und 1,28 g (0,006 mol) anstelle von 0,43 g (0,002 mol) Natriummetaperjodat zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,64; MS_{HPO} = 0,024; Visk 1,0 % = 1.500 mPa·s (Sp. 3); Visk 1,9 % = 16.200 mPa·s (Sp. 6); pH 1,0 % = 6,0; ZR = 0,6 %; AZ = 13 min; EZ = 51 min.

### Beispiel 7:

Die Versuchsdurchführung erfolgte analog wie in Beispiel 6 beschrieben, jedoch wurde die Oxidation mittels Natriummetaperjodat bei 40 °C anstelle von 50 °C durchgeführt. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,64; MS_{HPO} = 0,027; Visk 1,0 % = 2.745 mPa·s (Sp. 3); Visk 1,9 % = 22.100 mPa·s (Sp. 6); pH 1,0 % = 5,6; ZR = 0,3 %; AZ = 15 min; EZ = 58 min.

### Beispiel 8:

83,2 g (0,50 mol) gemahlener Zellstoff (TG = 97,4 %; GVZ = 1.350 ml/g) wurden mit 537,6 g 95 %igem *tert*.-Butanol und 73,0 g 100 %igem Isopropanol versetzt und in einem 2 I Druckreaktor unter Rühren suspendiert. Die Suspension wurde mittels mehrerer Vakuum/Stickstoff-Zyklen von Sauerstoff befreit (3 mal Vakuumziehen bis 0,1 bar mit dazwischen liegender Stickstoffbeaufschlagung bis 2,1 bar). Danach wurden 83,9 g 31,0 %ige Natronlauge (0,65 mol) über einen mitinertisierten Tropftrichter zudosiert, die Suspension wurde nochmals analog wie zuvor von Sauerstoff befreit und 20 min bei 25 °C gerührt. Nach Zugabe von 66,1 g (1,50 mol) Ethylenoxid über eine totraumfrei angeschlossene Druckgasflasche wurde die Suspension in 120 min auf 85 °C hochgeheizt und anschließend mit 60,9 g 59,0 %ige Salpetersäure (0,57 mol) über einen mitinertisierten Tropftrichter teilneutralisiert. Es wurden 18,5 g (0,25 mol) 2,3-Epoxypropanol zugegeben und 120 min bei 85 °C gerührt. Nach dem Abkühlen auf 30 °C wurde mittels Zugabe von Essigsäure ein pH-Wert von 5,0 eingestellt. Anschließend wurde eine Lösung aus 1,28 g (0,006 mol) Natriummetaperjodat in 25 g Wasser zugegeben und 3 h bei 50 °C gerührt. Nach dem Abkühlen auf 30 °C wurde das Produkt mittels mehrmaligem Beaufschlagen mit 80 %igem Aceton salzfrei gewaschen und mittels Beaufschlagen mit 100 %igem Aceton entwässert und über eine Glasfritte abgesaugt. Der Filterkuchen wurde zerkleinert, über Nacht bei 70 °C getrocknet, gegenüber Raumluft fechtekonditioniert, gemahlen und auf kleiner 1000 µm abgesiebt. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,22; MS_{HPO} = 0,036; Visk 1,0 % = 3.510 mPa·s (Sp. 4); Visk 1,9 % = 26.950 mPa·s (Sp. 6); pH 1,0 % = 6,3; ZR = 0,7 %; AZ = 6 min; EZ = 36 min.

### Beispiel 9:

83,5 g (0,50 mol) gemahlener Zellstoff (TG = 97,1 %; GVZ = 1.569 ml/g) wurden mit 584,3 g 100 %igem Isopropanol versetzt und in einem 2 I Druckreaktor unter Rühren suspendiert. Die Suspension wurde mittels mehrerer Vakuum/Stickstoff-Zyklen von Sauerstoff befreit (3 mal Vakuumziehen bis 0,1 bar mit dazwischen liegender Stickstoffbeaufschlagung bis 2,1 bar). Danach wurden 157,1 g 16,5 %ige Natronlauge (0,65 mol) über einen mitinertisierten Tropftrichter zudosiert, die Suspension wurde nochmals analog wie zuvor von Sauerstoff befreit und 15 min bei 25 °C gerührt. Nach Zugabe von 110,1 g (2,50 mol) Ethylenoxid über eine totraumfrei angeschlossene Druckgasflasche wurde die Suspension in 30 min auf 40 °C erwärmt, 60 min bei 40 °C gerührt und in 60 min auf 85 °C hochgeheizt. Es wurden 2,6 g (0,035 mol) 2,3-Epoxypropanol gelöst in 20 g 100 %igem Isopropanol zugegeben und 60 min bei 85 °C gerührt. Nach dem Abkühlen auf 30 °C wurde mit 59,6 g 37,0 %ige Salzsäure (0,605 mol) und 2,7 g Essigsäure (0,046 mol) neutralisiert und das Produkt mittels mehrmaligem Beaufschlagen mit 80 %igem Isopropanol salzfrei gewaschen. Der über eine Glasfritte abgesaugte feuchte Filterkuchen wurde wieder in den Reaktor überführt und in 1000 g 85 %igem Isopropanol suspendiert. Mittels Zugabe von Essigsäure wurde ein pH-Wert von 5,0 eingestellt. Anschließend wurde eine Lösung aus 2,57 g (0,012 mol) Natriummetaperjodat in 50 g Wasser zugegeben und 3 h bei 30 °C gerührt. Danach wurde das Produkt mittels Beaufschlagen mit 80 %igem Isopropanol salzfrei gewaschen und mittels Beaufschlagen mit 100 %igem Aceton entwässert und über eine Glasfritte abgesaugt. Der Filterkuchen wurde zerkleinert, über Nacht bei 70 °C getrocknet, gegenüber Raumluft feuchtekonditioniert, gemahlen und auf kleiner 1000 µm abgesiebt. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,55; MS_{HPO} = 0,007; Visk 1,0 % = 4.430 mPa·s (Sp. 4); Visk 1,9 % = 33.050 mPa·s (Sp. 6); pH 1,0 % = 5,8; ZR = 0,4 %; AZ = 37 min; EZ = 74 min.

### Vergleichsbeispiel 2:

83,5 g (0,50 mol) gemahlener Zellstoff (TG = 97,1 %; GVZ = 1.569 ml/g) wurden mit 584,3 g 100 %igem Isopropanol versetzt und in einem 2 I Druckreaktor unter Rühren suspendiert. Die Suspension wurde mittels mehrerer Vakuum/Stickstoff-Zyklen von Sauerstoff befreit (3 mal Vakuumziehen bis 0,1 bar mit dazwischen liegender Stickstoffbeaufschlagung bis 2,1 bar). Danach wurden 157,1 g 16,5 %ige Natronlauge (0,65 mol) über einen mitinertisierten Tropftrichter zudosiert, die Suspension wurde nochmals analog wie zuvor von Sauerstoff befreit und 15 min bei 25 °C gerührt. Nach Zugabe von 110,1 g (2,50 mol) Ethylenoxid über eine totraumfrei angeschlossene Druckgasflasche wurde die Suspension in 30 min auf 40 °C erwärmt, 60 min bei 40 °C gerührt und in 60 min auf 85 °C hochgeheizt. Es wurden 2,6 g (0,035 mol) 2,3-Epoxypropanol gelöst in 20 g 100 %igem Isopropanol zugegeben und 60 min bei 85 °C gerührt. Nach dem Abkühlen auf 30 °C wurde mit 59,6 g 37,0 %ige Salzsäure (0,605 mol) und 2,7 g Essigsäure (0,046 mol) neutralisiert. Das Produkt wurde mittels mehrmaligem Beaufschlagen mit 80 %igem Isopropanol salzfrei gewaschen, mittels Beaufschlagen mit 100 %igem Aceton entwässert und über eine Glasfritte abgesaugt. Der Filterkuchen wurde zerkleinert, über Nacht bei 70 °C getrocknet, gegenüber Raumluft fechtekonditioniert, gemahlen und auf kleiner 1000 µm abgesiebt. Die erhaltene pulverförmige DHPHEC zeigte keine Löseverzögerung und klumpte beim Einrühren in Wasser, wobei die Lösung zwar sofort Viskosität entwickelte, jedoch die verklumpten Anteile erst nach Tagen vollständig in Lösung gingen. Es wurden die folgenden Produktkenndaten ermittelt: MS_{EO} = 2,68; MS_{HPO} = 0,030; Visk 1,0 % = 4.370 mPa·s (Sp. 4); Visk 1,9 % = 29.000 mPa·s (Sp. 6); pH 1,0 % = 7,0; ZR = 0,6 %; AZ und EZ nicht ermittelt, da nicht klumpenfrei einrührbar.

### Beispiel 10:

Die Versuchsdurchführung erfolgte analog wie in Beispiel 9 beschrieben, jedoch wurden anstelle von 2,57 g (0,012 mol) nur 0,86 g (0,004 mol) Natriummetaperjodat zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,61; MS_{HPO} = 0,019; Visk 1,0 % = 4.580 mPa·s (Sp. 4); Visk 1,9 % = 30.950 mPa·s (Sp. 6); pH 1,0 % = 5,9; ZR = 0,1 %; AZ = 9 min; EZ = 27 min.

### Beispiel 11:

Die Versuchsdurchführung erfolgte analog wie in Beispiel 9 beschrieben, jedoch wurden 5,6 g (0,75 mol) anstelle von 2,6 g (0,035 mol) 2,3-Epoxypropanol und 0,86 g (0,004 mol) anstelle von 2,57 g (0,012 mol) Natriummetaperjodat zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,63; MS_{HPO} = 0,052; Visk 1,0 % = 4.710 mPa·s (Sp. 4); Visk 1,9 % = 30.500 mPa·s (Sp. 6); pH 1,0 % = 5,8; ZR = 0,1 %; AZ = 16 min; EZ = 43 min.

### Beispiel 12:

Die Versuchsdurchführung erfolgte analog wie in Beispiel 9 beschrieben, jedoch wurden 1,9 g (0,025 mol) anstelle von 2,6 g (0,035 mol) 2,3-Epoxypropanol und 0,86 g (0,004 mol) anstelle von 2,57 g (0,012 mol) Natriummetaperjodat zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,57; MS_{HPO} = 0,011; Visk 1,0 % = 4.720 mPa·s (Sp. 4); Visk 1,9 % = 30.900 mPa·s (Sp. 6); pH 1,0 % = 5,8; ZR = 0,1 %; AZ = 19 min; EZ = 42 min.

### Beispiel 13:

83,5 g (0,50 mol) gemahlener Zellstoff (TG = 97,1 %; GVZ = 1.569 ml/g) wurden mit 584,3 g 100 %igem Isopropanol versetzt und in einem 2 I Druckreaktor unter Rühren suspendiert. Die Suspension wurde mittels mehrerer Vakuum/Stickstoff-Zyklen von Sauerstoff befreit (3 mal Vakuumziehen bis 0,1 bar mit dazwischen liegender Stickstoffbeaufschlagung bis 2,1 bar). Danach wurden 157,1 g 16,5 % ige Natronlauge (0,65 mol) über einen mitinertisierten Tropftrichter zudosiert, die Suspension wurde nochmals analog wie zuvor von Sauerstoff befreit und 15 min bei 25 °C gerührt. Nach Zugabe von 99,1 g (2,25 mol) Ethylenoxid über eine totraumfrei angeschlossene Druckgasflasche wurde die Suspension in 30 min auf 40 °C erwärmt, 60 min bei 40 °C gerührt und in 60 min auf 85 °C hochgeheizt. Es wurden 2,6 g (0,035 mol) 2,3-Epoxypropanol gelöst in 20 g 100 %igem Isopropanol zugegeben und 60 min bei 85 °C gerührt. Nach dem Abkühlen auf 30 °C wurde mit 59,6 g 37,0 %ige Salzsäure (0,605 mol) und 2,7 g Essigsäure (0,046 mol) neutralisiert und mittels Zugabe von Essigsäure ein pH-Wert von 5,0 eingestellt. Anschließend wurde eine Lösung aus 2,14 g (0,010 mol) Natriummetaperjodat in 50 g Wasser zugegeben und 3 h bei 40 °C gerührt. Danach wurde das Produkt mittels mehrmaligem Beaufschlagen mit 80 %igem Isopropanol salzfrei gewaschen und mittels Beaufschlagen mit 100 %igem Aceton entwässert und über eine Glasfritte abgesaugt. Der Filterkuchen wurde zerkleinert, über Nacht bei 70 °C getrocknet, gegenüber Raumluft feuchtekonditioniert, gemahlen und auf kleiner 1000 µm abgesiebt. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,41; MS_{HPO} = 0,027; Visk 1,0 % = 4.800 mPa·s (Sp. 4); Visk 1,9 % = 30.750 mPa·s (Sp. 6); pH 1,0 % = 6,5; ZR = 0,6 %; AZ = 9 min; EZ = 18 min.

### Beispiel 14:

Die Versuchsdurchführung erfolgte analog wie in Beispiel 13 beschrieben jedoch wurden anstelle von 2,14 g (0,010 mol) nur 1,07 g (0,005 mol) Natriummetaperjodat zugegeben. Die erhaltene pulverförmige, modifizierte DHPHEC ließ sich klumpenfrei in Wasser einrühren, wobei zunächst eine dünnflüssige trübe Dispersion vorlag, die erst nach einer deutlichen Löseverzögerung unter Viskositätsentwicklung vollständig homogen in Lösung ging, bis schließlich eine transparente, nahezu farblose, viskose Lösung vorlag. Das Löseverhalten entsprach dem von glyoxalvernetzten Celluloseethern, jedoch ohne dass hierbei Glyoxal freigesetzt wurde (negativer Test auf Glyoxal). Die Löseverzögerung ließ sich wie bei glyoxalvernetzten Celluloseethern durch Zugabe von Lauge spontan aufheben. Es wurden die folgenden Produktkenndaten ermittelt: MS_{EO} = 2,25; MS_{HPO} = 0,027; Visk 1,0 % = 5.090 mPa·s (Sp. 4); Visk 1,9 % = 32.950 mPa·s (Sp. 6); pH 1,0 % = 6,4; ZR = 0,2 %; AZ = 5 min; EZ = 12 min.

**Tab. 1 Produktkenndaten von mit Natriummetaperjodat nachbehandelter DHPHEC (tert.-Butanol-Verfahren).**

| | GVZ [ml/g] | MV EO [mol/mol] | MS_{EO} | MV HPO [mol/mol] | MS_{HPO} (nach PJ) | MV PJ [mol/mol] | Perjodat Oxidation | Visk 1,0% [mPa·s] | Visk 1,9% [mPa·s] | pH | ZR [%] | AZ / EZ [min] |
|---|---|---|---|---|---|---|---|---|---|---|---|---|
| Beispiel 1 | 1.315 | 3,00 | 2,18 | 0,50 | 0,347 | 0,008 | 3 h / 50°C | 2.495 | 20.300 | 5,6 | 0,1 | 27 / 70 |
| Beispiel 2 | 1.315 | 3,00 | 2,19 | 0,50 | 0,380 | 0,004 | 3 h / 50°C | 2.970 | 22.100 | 5,9 | 0,3 | 13 / 42 |
| Beispiel 3 | 1.315 | 3,00 | 2,23 | 0,50 | 0,378 | 0,001 | 3 h / 50°C | 2.770 | 19.200 | 5,8 | 0,6 | 7 / 33 |
| Beispiel 4 | 1.315 | 3,00 | 2,16 | 0,05 | 0,031 | 0,004 | 3 h / 50°C | 1.875 | 16.060 | 6,7 | 0,7 | 9 / 29 |
| Beispiel 5 | 1.315 | 3,00 | 2,27 | 0,01 | 0,004 | 0,004 | 3 h / 50°C | 1.185 | 11.500 | 6,5 | 0,6 | 8 / 21 |
| Beispiel 6 | 1.315 | 3,60 | 2,64 | 0,05 | 0,024 | 0,012 | 3 h / 50°C | 1.500 | 16.200 | 6,0 | 0,6 | 13 / 51 |
| Beispiel 7 | 1.315 | 3,60 | 2,64 | 0,05 | 0,027 | 0,012 | 3 h / 40°C | 2.745 | 22.100 | 5,6 | 0,3 | 15 / 58 |
| Beispiel 8 | 1.315 | 3,00 | 2,22 | 0,05 | 0,036 | 0,012 | 3 h / 50°C | 3.510 | 26.950 | 6,3 | 0,7 | 6 / 36 |
| Vergleichsbeispiel 1 | 1.315 | 3,00 | 2,22 | 0,50 | 0,368 | --- | --- | 2.730 | 19.550 | 6,8 | 0,1 | n. m. (klumpt) |

**Tab. 2 Produktkenndaten von mit Natriummetaperjodat nachbehandelter DHPHEC (Isopropanol-Verfahren).**

| | GVZ [ml/g] | MV EO [mol/mol] | MS_{EO} | MV HPO [mol/mol] | MS_{HPO} (nach PJ) | MV PJ [mol/mol] | Perjodat Oxidation | Visk 1,0% [mPa·s] | Visk 1,9% [mPa·s] | pH | ZR [%] | AZ / EZ [min] |
|---|---|---|---|---|---|---|---|---|---|---|---|---|
| Beispiel 9 | 1.569 | 5,00 | 2,55 | 0,07 | 0,007 | 0,024 | 3 h / 30°C | 4.430 | 33.050 | 5,8 | 0,4 | 37 / 74 |
| Beispiel 10 | 1.569 | 5,00 | 2,61 | 0,07 | 0,019 | 0,008 | 3 h / 30°C | 4.580 | 30.950 | 5,9 | 0,1 | 9 / 27 |
| Beispiel 11 | 1.569 | 5,00 | 2,63 | 0,15 | 0,052 | 0,008 | 3 h / 30°C | 4.710 | 30.500 | 5,8 | 0,1 | 16 / 43 |
| Beispiel 12 | 1.569 | 5,00 | 2,57 | 0,05 | 0,011 | 0,008 | 3 h / 30°C | 4.720 | 30.900 | 5,8 | 0,0 | 19 / 42 |
| Beispiel 13 | 1.569 | 4,50 | 2,41 | 0,07 | 0,027 | 0,020 | 3 h / 40°C | 4.800 | 30.750 | 6,5 | 0,6 | 9 / 18 |
| Beispiel 14 | 1.569 | 4,50 | 2,41 | 0,07 | 0,027 | 0,010 | 3 h / 40°C | 5.090 | 32.950 | 6,4 | 0,2 | 5 / 12 |
| Vergleichsbeispiel 2 | 1.569 | 5,00 | 2,68 | 0,07 | 0,030 | --- | --- | 4.370 | 29.000 | 7,0 | 0,6 | n. m. (klumpt) |

## Patentansprüche

1. Reversibel vernetzter, wasserlöslicher Celluloseether mit mindestens zwei unterschiedlichen Etherkomponenten, **dadurch gekennzeichnet, dass**
a) mindestens eine der Etherkomponenten eine Alkyl-, Hydroxyalkyl- oder Carboxymethylgruppe ist und
b) mindestens eine der Etherkomponenten eine Alkylgruppe mit einer Aldehydfunktionalität ist, die mit freien OH-Gruppen des Celluloseethers hydrolysierbare Halbacetale bildet, wobei die Etherkomponente b) eine 2-Oxo-ethyl-Gruppe ist und der Substitutionsgrad DS(2-Oxo-ethyl) im Bereich von 0,0001 bis 0,1 liegt.

2. Celluloseether gemäß Anspruch 1, **dadurch gekennzeichnet, dass** die Etherkomponente a) eine Methyl-, Ethyl-, Propyl-, Butyl-, sec-Butyl-, Isobutyl-, 2-Hydroxyethyl-, Hydroxypropyl- und/oder eine Carboxymethyl-Gruppe ist.

3. Celluloseether gemäß Anspruch 1 , **dadurch gekennzeichnet, dass** der Substitutionsgrad DS(2-Oxo-ethyl) im Bereich von 0,001 bis 0,05, liegt.

4. Celluloseether gemäß einem oder mehreren der Ansprüche 1 bis 3, **dadurch gekennzeichnet, dass** der Substitutionsgrad DS(Alkyl) im Bereich von 1,2 bis 2,2, bevorzugt von 1,4 bis 2,0, liegt.

5. Celluloseether gemäß einem oder mehreren der Ansprüche 1 bis 3, **dadurch gekennzeichnet, dass** der Substitutionsgrad DS(Alkyl) im Bereich von 1,2 bis 2,2, bevorzugt von 1,4 bis 2,0, und der Substitutionsgrad MS(Hydroxyalkyl) im Bereich von 0,02 bis 1,0, bevorzugt von 0,05 bis 0,6, liegt.

6. Celluloseether gemäß einem oder mehreren der Ansprüche 1 bis 3, **dadurch gekennzeichnet, dass** der Substitutionsgrad MS(Hydroxyalkyl) im Bereich von 1,0 bis 4,0, bevorzugt von 1,5 bis 3,5, liegt.

7. Celluloseether gemäß einem oder mehreren der Ansprüche 1 bis 3, **dadurch gekennzeichnet, dass** der Substitutionsgrad MS(Hydroxyalkyl) im Bereich von 0,8 bis 3,0, bevorzugt von 1,0 bis 2,4, und der Substitutionsgrad DS(Carboxymethyl) im Bereich von 0,1 bis 1,0, bevorzugt von 0,2 bis 0,7, liegt.

8. Celluloseether gemäß einem oder mehreren der Ansprüche 1 bis 3, **dadurch gekennzeichnet, dass** der Substitutionsgrad DS(Carboxymethyl) im Bereich von 0,3 bis 1,2, bevorzugt von 0,5 bis 1,0, liegt.

9. Celluloseether gemäß einem oder mehreren der Ansprüche 1 bis 8, **dadurch gekennzeichnet, dass** er nach Aufhebung der Vernetzung eine Viskosität in 1 %iger wässriger Lösung im Bereich von 1 bis 15.000 mPa·s, bevorzugt 100 bis 10.000 mPa·s aufweist.

10. Verfahren zur Herstellung des reversibel vernetzten, wasserlöslichen Celluloseethers mit mindestens zwei unterschiedlichen Etherkomponenten gemäß einem oder mehreren der Ansprüche 1 bis 9, mit den Schritten
a) Behandeln von Cellulose oder einem Celluloseether mit wäßrigem Alkalihydroxid,
b) Umsetzen der alkalisierten Cellulose mit i) Ethylenoxid, Propylenoxid und/oder einem Alkylhalogenid und/oder 2-Choressigsäure bzw. dem Natriumsalz der 2-Chloressigsäure und ii) mit 2,3-Epoxypropanol oder 3-Chlorpropan-1,2-diol oder Umsetzen des alkalisierten Celluloseethers mit 2,3-Epoxypropanol oder 3-Chlorpropan-1,2-diol, wobei 2,3-Dihydroxypropylether-Gruppen entstehen,
c) gegebenenfalls Waschen des in Schritt b) erhaltenen Produkts,
d) Oxidative Spaltung der vicinalen Hydroxygruppen in den 2,3-Dihydroxypropylether-Gruppen, wobei 2-Oxo-ethylether-Gruppen entstehen,
e) Waschen des in Schritt d) erhaltenen Produkts und
f) Trocknen des gewaschenen Celluloseethers.

11. Verfahren gemäß Anspruch 10, **dadurch gekennzeichnet, dass** die Alkalisierung und die Veretherung der Cellulose oder des Celluloseethers in einem Slurry-Verfahren erfolgt.

12. Verfahren gemäß Anspruch 10 oder 11, **dadurch gekennzeichnet, dass** die Umsetzung der alkalisierten Cellulose mit Ethylenoxid, Propylenoxid und/oder einem Alkylhalogenid gleichzeitig mit der Umsetzung mit dem 2,3-Epoxypropanol oder dem 3-Chlorpropan-1,2-diol erfolgt.

13. Verfahren gemäß Anspruch 10 oder 11, **dadurch gekennzeichnet, dass** die Umsetzung der alkalisierten Cellulose mit dem 2,3-Epoxypropanol oder dem 3-Chlorpropan-1,2-diol direkt nach der Umsetzung mit dem Ethylenoxid, Propylenoxid und/oder dem Alkylhalogenid erfolgt, bevorzugt in demselben Reaktionsgefäß.

14. Verfahren gemäß einem oder mehreren der Ansprüche 10 bis 13, **dadurch gekennzeichnet, dass** die oxidative Spaltung durch Behandeln mit Perjodat oder Perjodsäure oder mit Bleitetraacetat, bevorzugt mit Natriumperjodat, erfolgt.

15. Verfahren gemäß einem oder mehreren der Ansprüche 10 bis 14, **dadurch gekennzeichnet, dass** die oxidative Spaltung bei einer Temperatur von 10 bis 60 °C, bevorzugt von 30 bis 50 °C, über einen Zeitraum von 30 Minuten bis 10 Stunden, bevorzugt von 1 bis 5 Stunden, durchgeführt wird.

16. Verfahren gemäß einem oder mehreren der Ansprüche 10 bis 15, **dadurch gekennzeichnet, dass** die oxidative Spaltung bei einem pH-Wert von 4 bis 7, bevorzugt von 5 bis 6, durchgeführt wird.

17. Verfahren gemäß einem oder mehreren der Ansprüche 10 bis 16, **dadurch gekennzeichnet, dass** als Celluloseether in Schritt a) Methylcellulose, Methylhydroxyethylcellulose, Methylhydroxypropylcellulose, Hydroxyethylcellulose, Hydroxyethylcarboxymethylcellulose, Carboxymethylcellulose oder Hydroxypropylcellulose eingesetzt wird.

## Claims

1. A reversibly crosslinked, water-soluble cellulose ether having at least two different ether components, wherein
a) at least one of the ether components is an alkyl, hydroxyalkyl or carboxymethyl group and
b) at least one of the ether components is an alkyl group having an aldehyde function which forms hydrolyzable hemiacetals with free OH groups of the cellulose ether,
wherein the ether component b) is a 2-oxo-ethyl group and the degree of substitution DS (2-oxo-ethyl) is in the range of from 0.0001 to 0.1.

2. The cellulose ether as claimed in claim 1, wherein the ether component a) is a methyl, ethyl, propyl, butyl, sec-butyl, isobutyl, 2-hydroxyethyl, hydroxypropyl and/or carboxymethyl group.

3. The cellulose ether as claimed in claim 1, wherein the degree of substitution DS(2-oxoethyl) is in the range from 0.001 to 0.05.

4. The cellulose ether as claimed in one or more of claims 1 to 3, wherein the degree of substitution DS(alkyl) is in the range from 1.2 to 2.2, preferably from 1.4 to 2.0.

5. The cellulose ether as claimed in one or more of claims 1 to 3, wherein the degree of substitution DS(alkyl) is in the range from 1.2 to 2.2, preferably from 1.4 to 2.0, and the degree of substitution MS(hydroxyalkyl) is in the range from 0.02 to 1.0, preferably from 0.05 to 0.6.

6. The cellulose ether as claimed in one or more of claims 1 to 3, wherein the degree of substitution MS(hydroxyalkyl) is in the range from 1.0 to 4.0, preferably from 1.5 to 3.5.

7. The cellulose ether as claimed in one or more of claims 1 to 3, wherein the degree of substitution MS(hydroxyalkyl) is in the range from 0.8 to 3.0, preferably from 1.0 to 2.4, and the degree of substitution DS(carboxymethyl) is in the range from 0.1 to 1.0, preferably from 0.2 to 0.7.

8. The cellulose ether as claimed in one or more of claims 1 to 3, wherein the degree of substitution DS(carboxymethyl) is in the range from 0.3 to 1.2, preferably from 0.5 to 1.0.

9. The cellulose ether as claimed in one or more of claims 1 to 8, wherein, after breaking of the crosslinking, it has a viscosity in 1 % strength aqueous solution in the range from 1 to 15 000 mPa·s, preferably from 100 to 10 000 mPa·s.

10. A process for preparing the reversibly crosslinked, water-soluble cellulose ether having at least two different ether components as claimed in one or more of claims 1 to 9, which comprises the steps
a) treatment of cellulose or a cellulose ether with aqueous alkali metal hydroxide,
b) reaction of the alkalized cellulose with i) ethylene oxide, propylene oxide and/or an alkyl halide and/or 2-chloroacetic acid or the sodium salt of 2-chloroacetic acid and ii) with 2,3-epoxypropanol or 3-chloropropane-1,2-diol, or reaction of the alkalized cellulose ethers with 2,3-epoxypropanol or 3-chloropropane-1,2-diol, forming 2,3-dihydroxypropyl ether groups,
c) optionally washing of the product obtained in step b),
d) oxidative cleavage of the vicinal hydroxy groups in the 2,3-dihydroxypropyl ether groups, forming 2-oxoethyl ether groups,
e) washing of the product obtained in step d), and
f) drying of the washed cellulose ether.

11. The process as claimed in claim 10, wherein the alkalization and the etherification of the celluloses or the cellulose ether are carried out in a slurry process.

12. The process as claimed in claim 10 or 11, wherein the reaction of the alkalized cellulose with ethylene oxide, propylene oxide and/or an alkyl halide occurs simultaneously with the reaction with the 2,3-epoxypropanol or the 3-chloropropane-1,2-diol.

13. The process as claimed in claim 10 or 11, wherein the reaction of the alkalized cellulose with the 2,3-epoxypropanol or the 3-chloropropane-1,2-diol is carried out immediately after the reaction with the ethylene oxide, propylene oxide and/or alkyl halide, preferably in the same reaction vessel.

14. The process as claimed in one or more of claims 10 to 13, wherein the oxidative cleavage is effected by treatment with periodate or periodic acid or with lead tetraacetate, preferably with sodium periodate.

15. The process as claimed in one or more of claims 10 to 14, wherein the oxidative cleavage is carried out at a temperature of from 10 to 60 °C, preferably from 30 to 50 °C, for a period of time of from 30 minutes to 10 hours, preferably from 1 to 5 hours.

16. The process as claimed in one or more of claims 10 to 15, wherein the oxidative cleavage is carried out at a pH of from 4 to 7, preferably from 5 to 6.

17. The process as claimed in one or more of claims 10 to 16, wherein methyl cellulose, methyl hydroxyethyl cellulose, methylhydroxypropyl cellulose, hydroxyethyl cellulose, hydroxyethyl carboxymethyl cellulose, carboxymethyl cellulose or hydroxypropyl cellulose is used as cellulose ether in step a).

## Revendications

1. Éther de cellulose soluble dans l'eau et réticulé de manière réversible avec au moins deux composants d'éther différents, **caractérisé en ce que**
a) au moins l'un des composants d'éther est un groupe alkyle, hydroxyalkyle ou carboxyméthyle et
b) au moins l'un des composants d'éther est un groupe alkyle avec une fonctionnalité aldéhyde, qui forme avec des groupes OH libres de l'éther de cellulose des hémi-acétals hydrolysables, le composant d'éther b) étant un groupe 2-oxo-éthyle et le degré de substitution DS(2-oxo-éthyle) étant compris entre 0,0001 et 0,1.

2. Éther de cellulose selon la revendication 1, **caractérisé en ce que** le composant éther a) est un groupe méthyle, éthyle, propyle, butyle, sec-butyle, isobutyle, 2-hydroxyéthyle, hydroxypropyle et/ou carboxyméthyle.

3. Éther de cellulose selon la revendication 1, **caractérisé en ce que** le degré de substitution DS(2-oxo-éthyle) est compris entre 0,001 et 0,05.

4. Éther de cellulose selon une ou plusieurs des revendications 1 à 3, **caractérisé en ce que** le degré de substitution DS(alkyle) est compris entre 1,2 et 2,2, de préférence entre 1,4 et 2,0.

5. Éther de cellulose selon une ou plusieurs des revendications 1 à 3, **caractérisé en ce que** le degré de substitution DS(alkyle) est compris entre 1,2 et 2,2, de préférence entre 1,4 et 2,0, et le degré de substitution MS(hydroxyalkyle) est compris entre 0,02 et 1,0, de préférence entre 0,05 et 0,6.

6. Éther de cellulose selon une ou plusieurs des revendications 1 à 3, **caractérisé en ce que** le degré de substitution MS(hydroxyalkyle) est compris entre 1,0 et 4,0, de préférence entre 1,5 et 3,5.

7. Éther de cellulose selon une ou plusieurs des revendications 1 à 3, **caractérisé en ce que** le degré de substitution MS(hydroxyalkyle) est compris entre 0,8 et 3,0, de préférence entre 1,0 et 2,4, et le degré de substitution DS(carboxyméthyle) est compris entre 0,1 et 1,0, de préférence entre 0,2 et 0,7.

8. Éther de cellulose selon une ou plusieurs des revendications 1 à 3, **caractérisé en ce que** le degré de substitution DS(carboxyméthyle) est compris entre 0,3 et 1,2, de préférence entre 0,5 et 1,0.

9. Éther de cellulose selon une ou plusieurs des revendications 1 à 8, **caractérisé en ce que**, après la neutralisation de la réticulation, il présente dans une solution aqueuse à 1 % une viscosité comprise entre 1 et 15 000 mPa·s, de préférence entre 100 et 10 000 mPa·s.

10. Procédé de fabrication de l'éther de cellulose soluble dans l'eau et réticulé de manière réversible avec au moins deux composants d'éther différents selon une ou plusieurs des revendications 1 à 9, avec les étapes :
a) traitement de la cellulose ou d'un éther de cellulose avec un hydroxyde alcalin aqueux,
b) transformation de la cellulose alcalinisée avec i) oxyde d'éthylène, oxyde de propylène et/ou halogénure d'alkyle et/ou acide 2-chloroacétique ou le sel de sodium de l'acide 2-chloroacétique et avec ii) 2,3-époxypropanol ou 3-chlorpropan-1,2-diol ou transformation de l'éther de cellulose alcalinisé avec 2,3-époxypropanol ou 3-chlorpropan-1,2-diol, des groupes d'éther 2,3-dihydroxypropylique se formant alors,
c) le cas échéant, lavage du produit obtenu à l'étape b),
d) division oxydative des groupes hydroxyle vicinaux en groupes d'éther 2,3-dihydroxypropylique, des groupes d'éther 2-oxo-éthylique se formant alors,
e) lavage du produit obtenu à l'étape d) et
f) séchage de l'éther de cellulose lavé.

11. Procédé selon la revendication 10, **caractérisé en ce que** l'alcalinisation et l'éthérification de la cellulose ou de l'éther de cellulose s'effectue dans un procédé en suspension dit Slurry.

12. Procédé selon la revendication 10 ou 11, **caractérisé en ce que** la transformation de la cellulose alcalinisée avec de l'oxyde d'éthylène, de l'oxyde de propylène et/ou un halogénure d'alkyle s'effectue en même temps que la transformation avec le 2,3-époxypropanol ou le 3-chlorpropan-1,2-diol.

13. Procédé selon la revendication 10 ou 11, **caractérisé en ce que** la transformation de la cellulose alcalinisée avec le 2,3-époxypropanol ou le 3-chlorpropan-1,2-diol s'effectue directement après la transformation avec l'oxyde d'éthylène, l'oxyde de propylène et/ou l'halogénure d'alkyle, de préférence dans le même récipient de réaction.

14. Procédé selon une ou plusieurs des revendications 10 à 13, **caractérisé en ce que** la division oxydative s'effectue par traitement avec du periodate ou de l'acide périodique ou avec du tétra-acétate de plomb, de préférence avec du periodate de sodium.

15. Procédé selon une ou plusieurs des revendications 10 à 14, **caractérisé en ce que** la division oxydative est effectuée à une température comprise entre 10 et 60 °C, de préférence entre 30 et 50 °C, pendant un intervalle de temps de 30 minutes à 10 heures, de préférence de 1 à 5 heures.

16. Procédé selon une ou plusieurs des revendications 10 à 15, **caractérisé en ce que** la division oxydative est effectuée avec une valeur de PH comprise entre 4 et 7, de préférence entre 5 et 6.

17. Procédé selon une ou plusieurs des revendications 10 à 16, **caractérisé en ce qu'**on utilise comme éther de cellulose à l'étape a) une cellulose méthylique, une cellulose méthylhydroxyéthylique, une cellulose méthylhydroxypropylique, une cellulose hydroxyéthylique, une cellulose hydroxyéthylocarboxyméthylique, une cellulose carboxyméthylique ou une cellulose hydroxypropylique.
